# EUROPÄISCHE PATENTSCHRIFT

(11) **EP 2 226 920 B1**
(45) Veröffentlichungstag und Bekanntmachung des Hinweises auf die Patenterteilung: **17.02.2021**
(21) Anmeldenummer: 10002346.4
(22) Anmeldetag: 08.03.2010
(51) Int. Cl.: H02K 7/18, F02B 63/04, H02K 1/18, H02K 5/16, H02K 9/19

(54) **Blockheizkraftwerk-Aggregat mit einem Verbrennungskolbenmotor und einer elektrischen Maschine**
Co-generation unit with a combustion piston engine and an electric machine
Système de cogénération avec un moteur à combustion à piston et une machine électrique

(30) Priorität: 06.03.2009 DE 102009011477
(43) Veröffentlichungstag der Anmeldung: 08.09.2010
(73) Patentinhaber: LichtBlick ZuhauseKraftwerk GmbH, 20359 Hamburg (DE)
(72) Erfinder: Dipl.-Ing. Appel, Christian, 25462 Rellingen (DE)
(74) Vertreter: Eisenführ Speiser

(56) Entgegenhaltungen:
- EP-A2- 1 829 725
- WO-A1-95/02758
- WO-A1-99/62167
- WO-A1-02/065619
- WO-A1-2008/067706
- WO-A2-2005/036721
- DE-A1- 19 618 865
- DE-U1- 8 334 714
- GB-A- 191 774
- US-A- 1 505 702

## Beschreibung

Die Erfindung betrifft die Verwendung eines Verbrennungskolbenmotors und einer elektrischen Maschine, vorzugsweise eines elektrischen Generators, die mittels einer Leistung übertragenden Welle miteinander gekoppelt sind, wobei der Generator einen Stator und einen Läufer aufweist, sowie ein Blockheizkraftwerk-Aggregat mit einem solchen Motor und einer solchen Maschine.

### Stand der Technik

Dokument US 1 505 702 A offenbart eine Beleuchtungseinheit, die auf dem Trittbrett eines Automobils oder einer ähnlichen Beförderung bequem von Ort zu Ort transportiert werden kann.

Dokument DE 83 34 714 U1 offenbart einen Stromerzeuger, insbesondere für Schiffe, mit einem aufklappbaren, im Betrieb dicht geschlossenen Außengehäuse, einem darin angeordneten Verbrennungsmotor und einem zusammen mit diesem vom Außengehäuse umschlossenen Generator, dessen Rotorwelle mit der Motorwelle des Verbrennungsmotors drehkraftübertragend verbunden ist.

Dokument EP 1 829 725 A2 offenbart eine Anordnung, die eine Kurbelwelle aufweist, an der ein Stab eines Kolbens, eine Wand eines Motorblocks und ein Schwungrad angebracht sind. Weiter ist ein Stator in eine dem Schwungrad gegenüberliegende Wand des Blocks integriert.

Dokument WO 99/62167 A1 offenbart einen Motorgenerator, bei dem in einem vertieften Teil eines Schwungrads eines Motors Rotormagnete mit ferromagnetischen Permanentmagneten fest an der inneren Umfangsfläche des Schwungrades angebracht sind.

Dokument WO 02/065619 A1 offenbart einen Motorgenerator, bei dem der Rotor eines Generators mit der Kurbelwelle eines Motors gekoppelt ist und der Generator durch Betätigen des Motors betätigt wird.

Dokument WO 2008/067706 A1 offenbart einen Stator für einen mehrpoligen Innenrotor-Permanentmagnet-Generator, bei dem Statorbleche unter Verwendung von selbstverknickenden Statorschlitzen zu einem Statorkörper geformt werden.

Dokument WO 95/02758 A1 offenbart eine Hilfsstromversorgung umfassend ein Motor-Balance-System, einen integrierten Alternator/Starter, ein Wärmemanagementsystem, ein Lärmvibrations-Härte-Kontrollsystem, ein Emissions-/Kraftstoffverbrauchssystem, ein APU-Master-Steuergerät und ein Fahrzeugsteuerungssystem.

Dokument WO 2005/036721 A2 offenbart ein Energieerzeugungssystem, das einen Verbrennungsmotor umfasst, der so konfiguriert ist, dass er eine mechanische Rotationsenergie bereitstellt. Ein Generator ist so konfiguriert, dass er die mechanische Rotationsenergie aufnimmt und in Abhängigkeit von der mechanischen Rotationsenergie elektrische Energie erzeugt. Ein Fluidmedium wird der Brennkraftmaschine und dem Generator zur Entfernung von Wärmeenergie aus dem Verbrennungsmotor und dem Generator zugeführt.

Aus dem Stand der Technik sind Aggregate für Blockheizkraftwerke der eingangs genannten Art bekannt, wobei ein Verbrennungskolbenmotor und ein elektrischer Generator auf einem separaten Geräteträger befestigt sind. Dieser Geräteträger ist für gewöhnlich ein Stahlrahmen, der hohen Anforderungen bezüglich der Fertigungsgenauigkeit der Lagersätze für den Verbrennungskolbenmotor und den elektrischen Generator sowie bezüglich der Steifigkeit, insbesondere Verdrehsteifigkeit, genügen muss. Denn die relative Einbaulage von dem Verbrennungskolbenmotor zu dem Generator ist von entscheidender Bedeutung. Sowohl der Verbrennungskolbenmotor als auch der Generator weisen jeweils eine Welle auf. In der Praxis werden diese beiden Wellen durch eine Kupplung miteinander gekoppelt. Ein möglicher Versatz in der Fluchtung beider Wellen führt zu ungewollten Biegemomenten in den Lagerungen des Verbrennungskolbenmotors beziehungsweise des Generators. Darüber hinaus kann es selbst bei präziser Fertigung des Verbrennungskolbenmotors, der Kupplung, des Generators und des Geräteträgers häufig nicht gewährleistet werden, dass die Fluchtung auch bei verschiedenen Betriebstemperaturen gewährleistet ist. Um der Gefahr des Versatzes der Fluchtung der Wellen entgegenzuwirken, wird insbesondere der Geräteträger, aber auch der Verbrennungskolbenmotor, die Kupplung und der Generator in der Weise konstruktiv ausreichend stark beziehungsweise steif ausgelegt, so dass die oftmals engen Toleranzgrenzen für die Fluchtungsgenauigkeit auch während des Betriebes eingehalten werden können.

Herkömmliche Blockheizkraftwerke, welche für den Einsatz in größeren Wärmesenken vorsehen sind, weisen weiterhin Verbrennungsmotor-Generator-Verbindungen oder Generatorvarianten auf, bei denen insbesondere Wartungsanforderungen im Vordergrund stehen und daher die Größe und das Gewicht eines solchen Blockheizkraftwerks eine untergeordnete Rolle spielt.

Die aus dem Stand der Technik bekannten Aggregate für Blockheizkraftwerke weisen jedoch einen schwerwiegenden Nachteil auf, denn insbesondere durch die hohen Anforderungen an die Fertigungsgenauigkeit ist ein solches Aggregat schwer und weist relativ große Ausmaße auf.

### Aufgabenstellung

Der Erfindung liegt daher die Aufgabe zugrunde, ein Blockheizkraftwerk-Aggregat mit den eingangs beschriebenen Merkmalen anzugeben, dessen räumliche Ausmaße jedoch möglichst klein oder kompakt sind und das möglichst ein geringes Gewicht aufweist.

### Beschreibung

Die Aufgabe wird durch ein erfindungsgemäßes Blockheizkraftwerk-Aggregat mit einem Verbrennungsmotor und einem elektrischen Generator, die mittels einer Leistung übertragenen Welle miteinander gekoppelt sind, wobei der Generator einen Stator und einen Läufer aufweist, dadurch gelöst, dass der Läufer fliegend gelagert ist und ein Verbrennungskolbenmotorgehäuse auch das Statorgehäuse und/oder den Stator bildet oder das Statorgehäuse und/oder der Stator an das Verbrennungskolbenmotorgehäuse angeflanscht ist oder aber dadurch, dass ein solcher Motor und Generator als BHKW-Aggregat verwendet wird. Die Aufgabe wird durch ein erfindungsgemäßes Blockheizkraftwerk-Aggregat gelöst, wobei der Stator mehrere Statorspulen umfasst, der Läufer ein Außenläufer ist, der Läufer eine Rotationsachse aufweist, der Läufer fliegend gelagert ist, ein Verbrennungskolbenmotorgehäuse auch das Statorgehäuse bildet oder das Statorgehäuse an das Verbrennungskolbenmotorgehäuse angeflanscht ist, ein Kühlkreislauf einer Kühlung gleichzeitig den Verbrennungskolbenmotor und den Stator kühlt, und wobei der Kühlkreislauf Generatorkühlungsleitungen und Motorkühlungsleitungen umfasst. Das erfindungsgemäße Blockheizkraftwerk-Aggregat ist, dadurch gekennzeichnet, dass die Generatorkühlungsleitungen zwischen der Rotationsachse des Läufers und den Statorspulen angeordnet sind, die Generatorkühlungsleitungen durch eine Rohrverbindungsleitung mit den Motorkühlungsleitungen verbunden sind, und dass die Motorkühlungsleitungen um den Zylinder Windungen bilden.

Unter einem Blockheizkraftwerk-Aggregat ist ein Aggregat für ein Blockheizkraftwerk zu verstehen. Ein solches Aggregat kann dazu alle nötigen Bauteile aufweisen, die nötig sind, um das Aggregat auch unabhängig von einem elektrischen Leistungsversorgungsnetz (elektrisches Stromversorgungsnetz) zu betreiben. Zu den Bauteilen zählt insbesondere auch ein Verbrennungskolbenmotor. Ein solcher Verbrennungskolbenmotor kann beispielsweise ein Ottomotor, Dieselmotor, Stirlingmotor oder ein sonstiger Verbrennungskolbenmotor sein, der in der Art ausgestaltet ist, ein Kraftstoffluftgemisch in einer Verbrennungskammer zu verbrennen und einen Kolben anzutreiben.

Weiterhin weist das erfindungsgemäße Blockheizkraftwerk-Aggregat einen elektrischen Generator mit einem Stator und einem Läufer auf. Ein Generator dieser Art kann beispielsweise ein elektrischer Asynchron- oder Synchrongenerator sein. Bevorzugt weist der Stator und/oder der Läufer des Generators Spulen auf, die insbesondere in der Weise zueinander angeordnet sind, dass an den Ausgängen des Stators zeitlich versetzte Wechselspannungen entstehen. Diese können insbesondere drei jeweils um 120 Grad in ihrem Phasenwinkel verschobene Wechselspannungen sein.

Auch möglich sind andere Anordnungen der elektromagnetischen Bauteile des Generators. So kann der elektrische Generator in der Art ausgestaltet sein, dass der Generator beispielsweise auch mehr als die drei Wechselspannungen, insbesondere ein Vielfaches der drei Wechselspannungen, also beispielsweise 6, 9 oder 12 Wechselspannungen, an den Ausgängen des Generators aufweist. Die Ausgangsspannungen des Generators können vorzugsweise durch eine Umrichtungsvorrichtung in drei jeweils um 120° versetzte Wechselspannungen oder in eine Spannung mit im Wesentlichen konstanten Potential, insbesondere Gleichspannung, umgewandelt werden.

Erfindungsgemäß sind der Verbrennungskolbenmotor und der elektrische Generator mittels einer Leistung übertragenen Welle miteinander gekoppelt. Aus dem Stand der Technik ist bekannt, dass eine derartige Kopplung durch eine Kupplung erfolgen kann. Eine solche Kupplung kann beispielsweise eine Scheibenkupplung oder eine andere mit Dämpfungselementen und/oder mit Elementen zum Ausgleich einer Fluchtungsungenauigkeit versehene Kupplung sein. Ferner kann die Kopplung insbesondere auch durch ein Getriebe erfolgen. Gegenüber solchen Ausgestaltungen aus dem Stand der Technik ist es für eine besondere Ausgestaltung der Erfindung bevorzugt, dass die Leistung übertragene Welle sowohl die Kurbelwelle des Verbrennungskolbenmotors als auch die Welle des Generators und/oder des Läufers bildet. Bevorzugt ist also, dass die Welle nicht durch trennende Elemente unterbrochen ist. Insbesondere kann die Kurbelwelle aus einzelnen mittels Presspassungen verbundenen Elementen bestehen. Ferner kann auch die Kurbelwelle des Verbrennungsmotors mit der Welle des Generators und/oder des Läufers fest verbunden, insbesondere fest miteinander verpresst, sein. So kann die Kurbelwelle des Verbrennungskolbenmotors mit der Welle des Generators und/oder des Läufers durch eine Passung, insbesondere Presspassung, verbunden sein.

Es ist weiter erfindungsgemäß, dass der Läufer fliegend gelagert ist. Eine fliegende Lagerung zeichnet sich dadurch aus, dass sie nur auf einer Seite des zu lagernden Objektes ausgebildet ist. Es ist daher bevorzugt, dass der Läufer nur auf seiner zum Verbrennungsmotor gerichteten Seite gelagert ist. Mit anderen Worten ist der Läufer bevorzugt nur einseitig gelagert. In einer besonders bevorzugten Ausführungsform ist der Läufer einseitig und/oder fliegend durch eine Lagerung der Kurbelwelle des Verbrennungsmotors gelagert, wobei die Lagerung mehrere Lagerstellen aufweisen kann. Die Kurbelwelle kann dafür am Verbrennungsmotorgehäuse gelagert sein, wobei die mehreren Lagerungsstellen insbesondere teilweise durch das Gehäuse gebildet werden können öder die Lagerungsstellen fest mit dem Gehäuse verbunden sein können. Weiter kann die Lagerung der Kurbelwelle mehrere Lager aufweisen. Diese Lager sind bevorzugt Radial- oder Gleitlager. Ferner können einzelne oder alle Lager der Lagerung neben dem Freiheitsgrad um die Rotationsachse der Kurbelwelle auch einen insbesondere begrenzten Freiheitsgrad in Axialrichtung der Kurbelwelle aufweisen, so dass die Welle vorzugsweise nicht statisch überbestimmt gelagert ist. Besonders bevorzugt ist, dass das zu dem Läufer am dichtesten positionierte Lager ein Radiaxlager ist, so dass es neben radialen auch axiale Kräfte aufnehmen kann. In einer bevorzugten Ausgestaltungsvariante ist die Lagerung der Kurbelwelle, die bevorzugt mehrere Lagerstellen aufweist, auch die einzige Lagerung des Läufers. Der Läufer weist dazu vorzugsweise auf der vom Verbrennungsmotor abgewandten Seite keine Lagerung auf. Auf dieser abgewandten Seite kann der Stator und/oder der Generator durch eine Stirnwandung im Wesentlichen abgeschlossen sein oder bis auf einen Durchbruch für die Läuferwelle abgeschlossen sein, wobei die Welle vorzugsweise von der Stirnwandung durch einen Dichtring insbesondere luft- und/oder schmutzdicht abgeschlossen ist. Ein für diese Ausgestaltungsvariante genannter Dichtring nimmt im Wesentlichen keine Kräfte und/oder Momente auf.

In einer besonders bevorzugten Ausgestaltungsvariante des Blockheizkraftwerk-Aggregates ist der Läufer an einem ersten nach außen von einer ersten Stirnseite des Verbrennungsmotorkolbengehäuses hervorspringenden fliegenden Wellenende insbesondere drehfest befestigt. Mit Stirnseiten eines Verbrennungsmotorgehäuses sind diejenigen Außenseiten des Verbrennungsmotors gemeint, an denen eine Leistung übertragene Welle, insbesondere Kurbelwelle, heraustritt. Ein Verbrennungskolbenmotor hat für gewöhnlich eine Kurbelwelle, die an zwei gegenüberliegenden Seiten des Verbrennungskolbenmotorgehäuses, nämlich an einer ersten und zweiten Stirnseite, austritt. Tritt die Kurbelwelle nur an einer Seite eines Verbrennungskolbenmotors aus, so weist dieser Verbrennungskolbenmotor auch nur eine (solche) erste Stirnseite auf. Bevorzugt ist, dass ein von der ersten Stirnseite nach außen hervorspringendes fliegendes Wellenende, insbesondere das nach außen hervorspringende fliegende Kurbelwellenende, mit der Welle des Läufers oder mit dem Läufer verbunden ist. Mit anderen Worten ist es bevorzugt, dass der Läufer direkt und vorzugsweise ohne Übersetzung und ohne Kupplung mit der Kurbelwelle verbunden ist beziehungsweise an dieser drehfest befestigt ist. Ferner ist dazu bevorzugt, dass der Läufer koaxial zu dem ersten fliegenden Wellenende oder zu der Rotationsachse der Welle angeordnet ist.

Weiter ist es gemäß einer Alternative (I) erfindungsgemäß, dass ein Verbrennungskolbenmotorgehäuse auch ein Gehäuse des Stators (Statorgehäuse) bildet, oder gemäß einer Alternative (II) ist es erfindungsgemäß, dass das Statorgehäuse an das Verbrennungsmotorgehäuse angeflanscht ist Wie auch aus dem vorangegangenen Satz hervorgehend, beziehen sich (I) und (II) auf zwei alternative Aspekte der vorliegenden Erfindung.

Gemäß Alternative (I) ist ein Statorgehäuse bevorzugt, das von dem Verbrennungsmotorgehäuse gebildet ist. So können also das Verbrennungskolbenmotorgehäuse und das Statorgehäuse ein Element sein. Sie können in einer besonders vorteilhaften Ausgestaltung ein einziges Gusselement sein. Auch ist es möglich, dass das Verbrennungskolbenmotorgehäuse und das Statorgehäuse durch eine stoffschlüssige Verbindung, insbesondere durch eine Schweißverbindung, miteinander verbunden sind.

Gemäß Alternative (II) ist es erfindungsgemäß, dass der Stator an das Verbrennungsmotorgehäuse angeflanscht ist. Um eine hohe relative Positioniergenauigkeit zu erreichen, kann der Stator und/oder das Statorgehäuse durch eine kraft- und/oder formschlüssige Verbindung an dem Verbrennungsmotorgehäuse befestigt sein. Eine Positionierung von Stator und/oder Statorgehäuse zu dem Verbrennungsmotorgehäuse erfolgt dann vorzugsweise mittels Passstiften.

Gemäß Alternative (II) ist es besonders bevorzugt, dass Flanschelemente des Stators oder des Statorgehäuses radial nach außen orientiert sind, um das Statorgehäuse vorteilhaft an das Verbrennungskolbenmotorgehäuse anflanschen zu können. Damit der Stator auch möglichst kompakt ist oder eine möglichst kurze axiale Länge aufweist, können die nach außen orientierten Flanschelemente in der Weise ausgestaltet sein, dass sie im Wesentlichen auch nur nach außen an den restlichen Stator anschließen und diesen nicht in seiner axialen Länge vergrößern. Die Flanschelemente verändern also nicht die axiale Länge des Generators, sondern gegebenenfalls nur seinen maximalen Außendurchmesser im Bereich der Flanschelemente. Vorzugsweise sind die Flanschelemente des Stators koaxial zu der Drehachse des Läufers ausgebildet, so dass der Flansch insbesondere eine umlaufende, dichtende Fläche zwischen dem Stator beziehungsweise Statorgehäuse und dem Verbrennungsmotorgehäuse bildet.

In einer weiteren Variante gemäß Alternative (II) weisen die Flanschelemente des Stators eine radiale sowie axiale Orientierung nach außen auf, so dass die Flanschelemente von außen über das Verbrennungskolbenmotorgehäuse fassen und vorzugsweise an dessen Seitenwandung angeflanscht sind.

Alle folgenden Ausführungen, Aspekte und/oder Merkmale der Erfindung sind nicht auf eine der Alternativen beschränkt. Vielmehr gelten sie grundsätzlich für beide Alternativen.

Für eine weitere bevorzugte Ausgestaltung des Blockheizkraftwerk-Aggregats bildet die Wandung einer ersten Stirnseite des Verbrennungskolbenmotorgehäuses auch eine stirnseitige Wandung des Stators. Mit Stirnseiten des Stators sind diejenigen Außenseiten des Stators gemeint, an denen eine Leistung übertragene Welle austritt. Für den Stator kann die Leistung übertragene Welle die Welle des Läufers (Läuferwelle) sein. Eine Variante des Blockheizkraftwerks-Aggregats ist deshalb auch dadurch gekennzeichnet, dass eine Trennwand zwischen dem Verbrennungskolbenmotorgehäuse und dem Statorgehäuse von der Wandung einer Stirnseite des Verbrennungsmotorgehäuses gebildet ist und insbesondere aufgrund einer fehlenden eigenen stirnseitigen Wandung des Stators auch eine zum Verbrennungsmotor orientierte stirnseitige Wandung des Stators bildet. Vorteilhaft an dieser Ausgestaltungsvariante ist, dass der Stator zwar gedanklich eine Außenseite hat, nämlich jene die zum Verbrennungsmotor orientiert ist, jedoch ist die stirnseitige Wandung des Generators an dieser Außenseite nicht durch den Stator gebildet, sondern durch die Stirnseite des Verbrennungskolbenmotors. Die vom Verbrennungskolbenmotor weg orientierte Außenseite des Stators kann durch eine stirnseitige Wandung geschlossen sein oder auch einen Durchbruch für die Läuferwelle aufweisen.

In einer besonders einfachen Variante hat das Statorgehäuse eine Rumpfstruktur, die in der Weise ausgebildet ist, dass sich weitere Statorbauteile an ihr befestigen lassen können. So kann das Statorgehäuse Träger für die elektromagnetisch wirkende Elemente des Stators sein. Ein solches Element kann ein Statorkranz sein. Der Statorkranz umfasst den gemeinsamen, vorzugsweise ferromagnetischen, Kern, insbesondere Eisenkern, der Spulen des Stators. Bevorzugt ist der Statorkranz ein im Wesentlichen zylindrisches Element mit regelmäßig über den Umfang verteilt, nach innen hervorspringenden Zähnen. Sofern die elektrischen Maschine einen Außenläufer aufweist, können die Zähne alternativ auch nach außen hervorspringen. Die Zähne des Statorkranzes sind für gewöhnlich in der Weise ausgestaltet, dass um diese Spulenwicklungen herumführen können. Der Statorkranz ist ferner bevorzugt ein aus vielen Blechen zusammengesetztes oder ein aus insbesondere einem Blech aufgewickeltes Blechpaket. Des Weiteren kann die Verbindung zwischen Statorkranz und Statorgehäuse in der Art ausgestaltet sein, dass sie eine Presspassung bildet, so dass eine sehr geringe Fertigungstoleranz auftritt.

Blockheizkraftwerke zeichnen sich insbesondere auch dadurch aus, dass elektrische und thermische Leistung an Verbraucher übertragen wird. Die Kopplung eines Verbrennungskolbenmotors mit einem elektrischen Generator ermöglicht die Transformation von mechanischer Leistung zu elektrischer Leistung. Diese Übertragung ist jedoch grundsätzlich verlustbehaftet. Diese Verluste sind im Wesentlichen auf die Abwärme des Generators zurückzuführen. Um die Abwärme des Generators, die im Wesentlichen auch eine thermische Energie darstellt, vorteilhaft in die Leistungs- beziehungsweise Energiebilanz eines Blockheizkraftwerkes einzubinden, zeichnet sich eine vorteilhafte Ausgestaltung des Blockheizkraftwerk-Aggregates dadurch aus, dass ein Kühlkreislauf einer Kühlung insbesondere gleichzeitig den Verbrennungskolbenmotor und den Stator kühlt, wobei der Kühlkreislauf vorzugsweise von eine Fluid oder insbesondere von Wasser, öl oder Luft durchströmt ist. Die Kühlung kann ferner eine Wärmepumpe aufweisen, so dass die thermische Energie des Verbrennungskolbenmotors und/oder des Stators oder des Generators an einen externen Verbraucher übertragbar ist. Vorteilhaft kann durch diese Ausgestaltung der Wirkungsgrad des Blockheizkraftwerk-Aggregates erhöht sein, indem nicht nur die thermische Leistung beziehungsweise Energie des Verbrennungskolbenmotors genutzt wird, sondern eben auch die thermische Leistung beziehungsweise Energie des elektrischen Generators.

Eine Variante des Aggregates kennzeichnet sich dadurch, dass mindestens eine Kühlleitung der Kühlung am radialen äußeren Umfang des Stators angeordnet ist. Diese Anordnung ist auch unter Beachtung thermodynamischer Aspekte vorteilhaft. Denn wird eine thermodynamische Systemgrenze zwischen Kühlung und dem restlichen Stator gezogen, so kann ein Großteil der thermischen Leistung beziehungsweise Energie des Generators an die Kühlung übertragen werden. Allenfalls der Übergang vom Generator zum Verbrennungskolbenmotor stellt eine Teilsystemgrenze dar, an der thermische Leistung beziehungsweise Energie nicht unmittelbar an die Kühlung übertragen werden könnte. Bereits vom Flächenverhältnis ist diese Teilgrenze zu der restlichen Grenze jedoch deutlich kleiner, so dass während des Betriebes des Aggregats ein Großteil der thermischen Leistung beziehungsweise Energie des Generators an die Kühlung übertragen werden kann. Die an der Teilsystemgrenze übertragene thermische Leistung kann zudem zumindest teilweise auch an die Kühlung des Verbrennungskolbenmotors übertragen werden, was die Effizienz des Aggregats weiter erhöht.

Neben der Effizienz kann es aber auch sehr erstrebenswert sein, dass das Aggregat möglichst wartungsarm ist. Ein besonders vorteilhafte Variante des Aggregates zeichnet sich insbesondere deshalb dadurch aus, dass die elektrische Maschine luftgekühlt ist. Anders als beispielsweise bei einer Wasserkühlung, ist die elektrische Maschine nicht mit dem Kühlungsmittel zu versehen. Es kann vielmehr die Umgebungsluft, oder sofern die Kühlung ein abgeschlossenes System ist, die im System vorhandene Luft, zur Kühlung verwendet werden. Dazu kann der Stator und/oder der Rotor Kühlrippen aufweisen. Eine an den Rippen vorbei strömende Luft kann die Wärmeenergie der Rippen beziehungsweise des Stators und/oder des Rotors aufnehmen und somit eine Kühlung der elektrischen Maschine ermöglichen.

Je nach Ausführungsvariante kann die Anordnung der Kühlrippen anders ausgestaltet sein. Insbesondere für eine elektrische Maschine mit einem Innenläufer können die Kühlrippen des Stators radial nach außen hervorspringen. Vorzugsweise erstrecken sich die Kühlrippen über die Längsachse des Stators. Die Kühlrippen können aber auch als Stege, insbesondere als radial ausgestaltete Stege; zwischen zwei vorzugsweise zylindrischen Mantelflächen ausgestaltet sein. Vorteilhaft sind die Mantelflächen dazu koaxial zur Drehachse des Rotors angeordnet. Die Stege und die

Mantelflächen können des Weiteren Kanäle, insbesondere bis auf Ein- und Ausgänge abgeschlossene Kanäle, ausbilden. Um einen Luftstrom zur Kühlung hervorzurufen, kann die elektrische Maschine ein Lüfterrad aufweisen, das bevorzugt an die Leistung übertragende Welle gekoppelt ist und/oder drehfest an der Welle befestigt ist.

Für eine elektrische Maschine insbesondere mit einem Außenläufer kann der Stator mindestens einen, insbesondere durchführenden, Kanal aufweisen. Besonders bevorzugt kann ein Kanal eine koaxial zur Drehachse des Rotors ausgestaltete Bohrung sein. Von der Mantelfläche dieses Kanals können vorteilhaft Kühlrippen radial nach innen hervorspringen. Ferner kann durch den Kanal eine Welle führen. Ist dies der Fall, springen die Kühlrippen insbesondere nur soweit hervor, dass sie die Welle nicht berühren. Insbesondere kann der radiale Abstand zwischen dem äußersten Umfang der Welle und dem am weitesten hervorspringenden Ende einer Rippe insbesondere 0,1 mm bis 5 mm, vorzugsweise 1 mm, sein.

Um den Anforderungen eines kompakten Blockheizkraftwerk-Aggregates zu genügen, ist es ferner vorteilhaft, wenn auch der Generator kompakt ist. Für eine in diesem Sinne vorteilhafte Ausgestaltung des Aggregats ist der Läufer des Generators kurz. Der Läufer weist dazu insbesondere eine maximale Länge von 15, 12,5, 10, 7,5, 5, 4 oder 3 cm auf. Weiterhin vorteilhaft ist ein Verhältnis von einem maximalen radialen Durchmesser zu einer maximalen Länge des Läufers von größer als 4, insbesondere aus einem Bereich von 4 bis 10, vorzugsweise aus einem Bereich von 5 bis 8. Bei einer Ausgestaltung des Läufers mit dem zuvor genannten Verhältnis oder einem Verhältnis aus den zuvor genannten Bereichen ist eine vorteilhafte kompakte Form des Generators erreichbar.

Ein alternativer oder weiterer Maßstab für die Kompaktheit ist die Leistungsdichte. Sie kann sich beispielsweise durch die abgebbare Leistung zu dem eingenommenen Raum des Aggregats berechnen. Im Sinne dieser Anforderung ist eine weitere vorteilhafte Ausgestaltung des Aggregats dadurch gekennzeichnet, dass der Läufer durch einen schmalen Spalt, insbesondere Luftspalt, insbesondere von maximal 2 cm, vorzugsweise von maximal 5 mm, von der ersten Stirnseite des Verbrennungskolbenmotorgehäuses beabstandet ist. Dieser Vorteil wird vorzugsweise dann verstärkt, wenn das Verbrennungskolbenmotorgehäuse auch die trennende Wand zu dem Statorgehäuse bildet. Denn dann hat der Stator im weiteren Sinne keine eigene Stirnwandung, sondern teilt sich diese mit dem Verbrennungskölbenmotor. Dadurch, dass der Läufer möglichst dicht an der Stirnseite des Verbrennungskolbenmotorgehäuses positioniert ist, erhöht sich die Leistungsdichte, denn ein kleiner Luftspalt trägt zwar nicht zur Erhöhung der abgebbaren Leistung bei, verringert jedoch das beanspruchte Volumen des Aggregates, so dass die Leistungsdichte steigt und das Aggregat kompakt ist beziehungsweise kompakter wird.

Eine möglichst dichte Anordnung des Läufers an die zuvor genannte Stirnwand erhöht also die Leistungsdichte des Aggregates. Ein weiterer Vorteil dieser geringen Beabstandung ist ein geringeres Moment, insbesondere Biege- oder Kippmoment, das durch den Läufer auf die Lagerung, insbesondere Verbrennungsmotorlagerung, wirkt. Die Lagerung kann somit auch für geringere Lasten ausgestaltet sein, was zusätzlich das Gewicht des Aggregats reduzieren kann und gegebenenfalls auch das Volumen und/oder das Ausmaß, so dass sich die Leistungsdichte zusätzlich erhöhen kann.

Für eine weitere Ausgestaltung, die ebenfalls vorteilhaft die Kompaktheit des Aggregates erhöht, ist bevorzugt, dass der Generator auch als Motor betrieben werden kann. Der Generator kann also auch eine elektrischen Maschine sein. Weiterhin ist es bevorzugt, dass der Generator im motorischen Betrieb zum Anlassen des Verbrennungskolbenmotors dient Verbrennungskolbenmotoren haben für gewöhnlich einen Anlasser, der den Verbrennungskolbenmotor über einen entkoppelbaren Antrieb aus dem Stillstand anlässt, die Kurbelwelle also in Rotation versetzt. Sobald die Startleistung, die der Anlasser dem Verbrennungskolbenmotor zuführt, ausreichend ist, läuft dieser von selbst weiter. Der Anlasser wird daraufhin von dem Verbrennungskolbenmotor mechanisch entkoppelt. Das bedeutet aber auch, dass der Anlasser während des regulären Betriebes des Verbrennungskolbenmotors nicht genutzt wird. Unabhängig von dem Betriebszustand des Anlassers nimmt dieser aber einen (Teil-)Raum des Aggregats ein. Durch die bevorzugte integration des Anlassers in den Generator kann der separate Anlasser entfallen, so dass sich die Kompaktheit des Aggregates erhöhen kann.

Gewöhnliche Industriemotoren weisen im Allgemeinen ein mit der Kurbelwelle verbundenes Schwungelement auf. Auch unter dem Aspekt, die Kompaktheit des Aggregats zu erhöhen, ist es bevorzugt, dass der Verbrennungskolbenmotor und/oder der Generator kein separates Schwungelement, insbesondere keine Schwungscheibe aufweist. Allenfalls kann es bevorzugt sein, dass der Läufer ein Schwungelement des Verbrennungskolbenmotors ist. Auch wenn der Läufer ein Schwungelement ist, ist es ferner besonders bevorzugt, dass an der Kurbelwelle in dem vom Verbrennungskolbenmotor wegführenden, generatorseitigen Bereich kein separates Schwungelement, insbesondere keine Schwungscheibe, befestigt ist. Sollte es dennoch vorteilhaft sein, dass der Verbrennungskolbenmotor ein Schwungelement aufweist, so kann an der Kurbelwelle in dem vom Verbrennungskolbenmotor wegführenden, nicht generatorseitigen Bereich ein insbesondere separates Schwungelement, vorzugsweise eine Schwungscheibe, befestigt sein.

Weiterhin ist die erfindungsgemäße Verwendung des Aggregates in einem Blockheizkraftwerk dadurch gekennzeichnet, dass die Kühlung mit einer Wärmekuppel gekoppelt ist, die die thermische Leistung, insbesondere Wärmeleistung des Verbrennungskolbenmotors und des Generators oder des Stators an ein thermodynamisches System überträgt. Ein solches thermodynamisches System kann beispielsweise ein Verbraucher oder eine Wärmepumpe sein, die die thermische Leistung vorzugsweise an ein anderes Leistungsübertragungssystem, insbesondere einen Heizkreislauf, überträgt.

**Bezugszeichen:**

| **Bezugszeichen** | **Bedeutung** |
|---|---|
| 2 | Verbrennungskolbenmotor |
| 4 | Kurbelwelle |
| 6 | Kolben |
| 8 | Zylinder |
| 10 | Verbrennungskolbenmotorgehäuse |
| 12 | Lagerstelle |
| 14 | erste Stirnseite des Verbrennungskolbenmotorgehäuses |
| 16 | zweite Stirnseite des Verbrennungskolbenmotorgehäuses |
| 20 | elektrischer Generator |
| 22 | Läufer |
| 24 | Stator |
| 26 | Läuferwelle |
| 28 | Statorspule |
| 30 | erste Stirnseite des Statorgehäuses bzw. des Stators |
| 32 | zweite Stirnseite des Statorgehäuses bzw. des Stators |
| 34 | Statorgehäuse |
| 36 | erste Lagerstelle |
| 38 | zweite Lagerstelle |
| 40 | Blockheizkraftwerk-Aggregat |
| 42 | Verbrennungskolbenmotor |
| 44 | elektrischer Generator |
| 46 | Kurbelwelle |
| 48 | Kolben |
| 50 | Zylinder |
| 52 | Verbrennungskolbenmotorgehäuse |
| 54 | Lagerstelle |
| 56 | erste Stirnseite des Verbrennungskolbenmotorgehäuses |
| 58 | zweite Stirnseite des Verbrennungskolbenmotorgehäuses |
| 60 | Läufer |
| 62 | Spalt, insbesondere Luftspalt |
| 64 | maximaler radialer Durchmesser des Läufers |
| 66 | maximale axiale Länge des Läufers |
| 68 | Läuferwelle |
| 70 | Statorgehäuse |
| 72 | Stator |
| 74 | Flanschelement |
| 76 | Motorkühlungsleitung |
| 78 | Generatorkühlungsleitung |
| 80 | Statorkranz |
| 82 | Kontaktfläche |
| 84 | Statorzähne |
| 86 | Läuferträgerelement |
| 88 | Permanentmagnet |
| 90 | Statorspule |
| 92 | Rohrverbindungsleitung |
| 94 | elektrische Verbindungsleitung |
| 96 | Flanschelement |
| 98 | hervorspringendes Wellenende |
| 100 | konischer Bereich des Läuferträgerelements |
| 102 | Abdeckung |
| A | vom Verbrennungskolbenmotor wegführenden, generatorseitige Bereich |
| B | vom Verbrennungskolbenmotor wegführenden, nicht generatorseitige Bereich |

### Ausführungsbeispiele

Weitere vorteilhafte Weiterbildungen, Merkmale und Aspekte der Erfindung sind in der Beschreibung zu den folgenden Ausführungsbeispielen erläutert. Dabei zeigt:
- **Figur 1**: eine Schnittdarstellung eines bekannten Kolbenverbrennungsmotors,
- **Figur 2**: eine Schnittdarstellung eines bekannten elektrischen Generators,
- **Figur 3**: eine vereinfachte Schnittdarstellung eines beispielhaften Blockheizkraftwerk-Aggregates, insbesondere gemäß Alternative (I),
- **Figur 4**: eine weitere, vereinfachte Schnittdarstellung eines beispielhaften Blockheizkraftwerk-Aggregates, insbesondere gemäß Alternative (II).
- **Figur 5**: eine vereinfachte Querschnittsdarstellung des elektrischen Generators und
- **Figur 6**: eine vereinfachte Schnittdarstellung des erfindungsgemäßen Blockheizkraftwerk-Aggregates mit Außenläufer-Generator.

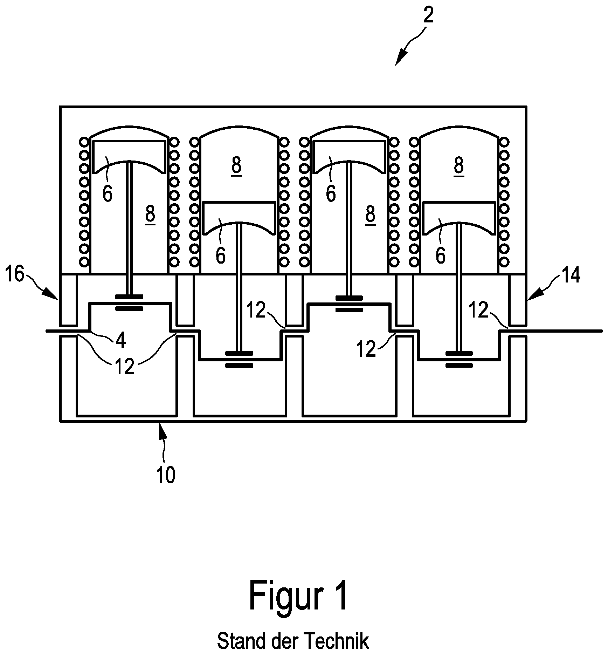

In der Figur 1 ist ein bekannter Verbrennungskolbenmotor 2 dargestellt. Dieser Verbrennungskolbenmotor umfasst eine Kurbelwelle 4, vier Kolben 6, vier Zylinder 8 sowie ein Verbrennungskolbenmotorgehäuse 10. Die Kurbelwelle 4 ist an fünf Lagerstellen 12 gelagert. An den äußeren Lagerungsstellen 12 des Verbrennungskolbenmotorgehäuses 10 tritt die Kurbelwelle 4 an einer ersten Stirnseite 14 und an einer zweiten Stirnseite 16 des Verbrennungskolbenmotorgehäuses 10 aus.

Es ist bekannt, dass eine Verbrennung in dem Verbrennungsraum des Zylinders 8 eine beschleunigte Bewegung des Kolben 6 hervorruft, der wiederum die Kurbelwelle 4 in eine rotatorische Bewegung versetzt. Die mechanische Leistung des Verbrennungskolbenmotors, insbesondere charakterisiert durch eine Drehzahl und ein Drehmoment der Kurbelwelle 4, kann durch die Kurbelwelle 4 an externe Systeme übertragen werden.

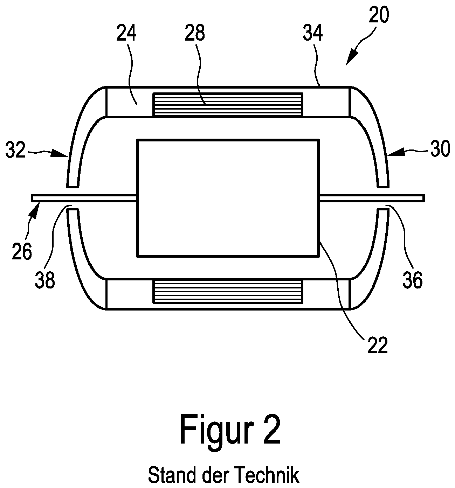

In der Figur 2 ist schematisch ein bekannter elektrischer Generator 20 dargestellt. Aus dem Stand der Technik ist bekannt, dass ein solcher Generator 20 über eine Kupplung und/oder ein Getriebe an den Verbrennungskolbenmotor 2 koppelbar ist. Der elektrische Generator 20 weist einen Läufer 22 und einen Stator 24 auf. Insbesondere während eines Betriebes des elektrischen Generators 20 stehen der Läufer 22 und der Stator 24 in elektromagnetischer Wechselwirkung zueinander. Wird der Läufer durch die Läuferwelle 26 von außen rotatorisch angetrieben, so induziert der Läufer 22 eine elektrische Spannung in den Statorspulen 28. Weiter weist der Stator ein Statorgehäuse 34 auf. Von dem Statorgehäuse umfasst und/oder von diesem gebildet sind die Wandungen der ersten Stirnseite 30 und der zweiten Stirnseite 32 des Stators 24. Der Läufer 60 beziehungsweise die Läuferwelle 26 ist durch die erste Lagerstelle 36 an der ersten Stirnseite 36 des Statorgehäuses 34 und an einer zweiten Lagerstelle 38 an der zweiten Stirnseite 32 des Statorgehäuses 34 gelagert.

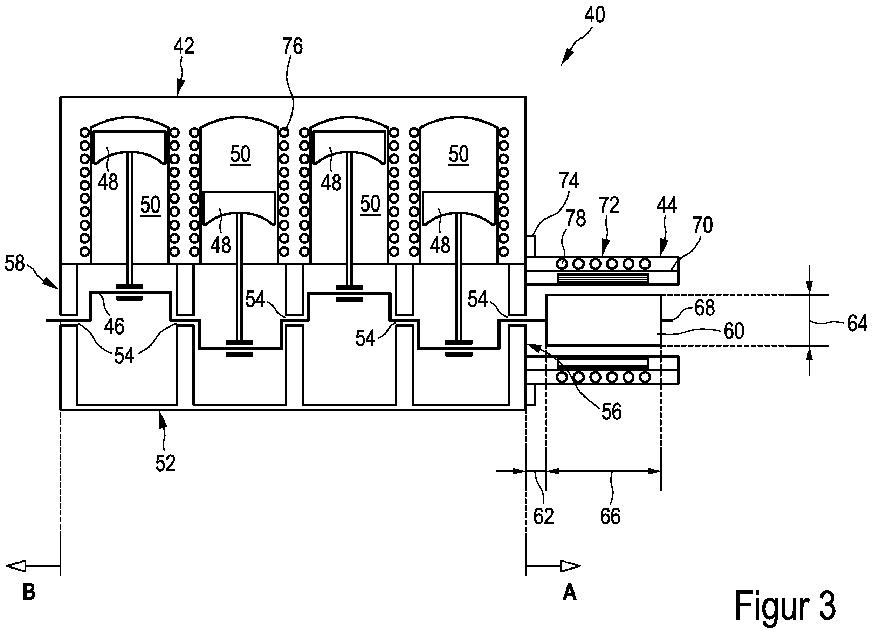

In der Figur 3 ist eine vereinfachte schematische Darstellung eines Blockheizkraftwerk-Aggregates gezeigt. Das Blockheizkraftwerk 40 weist einen Verbrennungskolbenmotor 42 und einen elektrischen Generator 44 auf. Wie aus dem Stand der Technik bekannt, umfasst der Verbrennungskolbenmotor 42 eine Kurbelwelle 46, beispielsweise vier Kolben 48 sowie entsprechend vier Zylinder 50. Der Verbrennungskolbenmotor 42 weist weiter ein Verbrennungskolbenmotorgehäuse 52 sowie insbesondere fünf Lagerstellen 54 auf, die die Kurbelwelle 56 an dem Verbrennungskolbenmotorgehäuse 52 lagern. Die Lager der Lagerung sind insbesondere dadurch gekennzeichnet, dass sie in axialer Richtung der Kurbelwelle **46** im Wesentlichen keine Drehmomente auf das Verbrennungskolbenmotorgehäuse **52** übertragen. Die Lager haben also mindestens einen Freiheitsgrad.

An der ersten Stirnseite **56** und insbesondere auch an der zweiten Stirnseite **58** des Verbrennungskolbenmotorgehäuses tritt die Kurbelwelle heraus und/oder springt gegenüber dem Verbrennungskolbenmotorgehäuse hervor. An der ersten Stirnseite **56** des Verbrennungskolbenmotorgehäuses **52** springt die Kurbelwelle insbesondere soweit hervor, dass der Läufer **60** und/oder die Läuferwelle des elektrischen Generators **44** drehfest an der Kurbelwelle befestigt ist. Der Läufer **60** ist also an einem ersten nach außen von der ersten Stirnseite **56** des Verbrennungskolbenmotorgehäuses **52** hervorspringenden fliegenden Wellenende insbesondere drehfest befestigt. Mit anderen Worten ist der Läufer 60 fliegend oder einseitig gelagert. Die Ausrichtung des Läufers 60 ist koaxial zu dem hervorspringendem Wellenende der Kurbelwelle **46.**

Damit das Aggregat möglichst kompakt ist, ist der Läufer **60** durch einen schmalen Spalt **62,** insbesondere Luftspalt, insbesondere von maximal 2 cm, vorzugweise von maximal 5 mm, von der ersten Stirnseite **56** des Verbrennungskolbenmotorgehäuses **52** beabstandet, so dass vorzugsweise ein möglichst geringes Moment, insbesondere Biege- oder Kippmoment, durch den Läufer **60** auf die Lagerstellen **54** wirkt.

Ferner ist in Figur 3 dargestellt, dass der Verbrennungskolbenmotor **42** und der elektrische Generator **44** eine gemeinsame Welle aufweisen. Die Welle bildet sowohl die Kurbelwelle **54** des Verbrennungskolbenmotors **42** als auch die Läuferwelle **68** des elektrischen Generators **44** beziehungsweise des Läufers **60.** Die Läuferwelle **68** und die Kurbelwelle **46** sind also nicht durch ein zusätzliches Bauteil wie eine Kupplung getrennt. Und auch nur so ist es möglich, dass der Läufer **60** durch den Spalt **62,** der vorzugsweise nur 5 bis 20 mm breit ist, von der ersten stirnseitigen Wandung **56** des Verbrennungskolbenmotorgehäuses **52** beabstandet ist. Dieser Vorteil wird insbesondere auch dadurch verstärkt, dass das Statorgehäuse **70** an das Verbrennungskolbenmotorgehäuse **52** angeflanscht ist, wobei das Statorgehäuse **70** insbesondere ein Teilelement des Stators **72** ist. Die Positionierung des Stators **72** zu dem Verbrennungskolbenmotorgehäuse **52** erfolgt mittels Passstiften und insbesondere auch mittels einer kraftschlüssigen Verbindung.

Die Flanschelemente **74** des Stators **72** beziehungsweise des Statorgehäuses **70** sind radial nach außen orientiert. Eine Verbindung zwischen dem Verbrennungskolbenmotor **42** und dem elektrischen Generator **40** ist also in der Weise ausgestaltet, dass Verbindungselemente des Generators **44** nicht von einer Achse geschnitten werden können, die von zwei axial voneinander beabstandeten, sich auf dem äußeren Umfang des Läufers befindlichen Punkten gebildeten sind, und sich die Achse parallel zur Drehachse des Läufers erstreckt. Mit anderen Worten sind die Flanschelemente bevorzugt in der Weise ausgestaltet, dass eine Projektion der Läuferquerschnittsfläche koaxial zur Läuferwellenachse auf die Stirnseite des Verbrennungskolbenmotorgehäuses nicht die Flanschelemente schneidet. Die Flanschelemente weisen also insbesondere nicht in den Innenraum des Stators. Weiter sind die Flanschelemente gegenüber dem restlichen Stator in der Weise ausgestaltet, dass sie die axiale Länge des Stators nicht beeinflussen, beziehungsweise nicht verlängern.

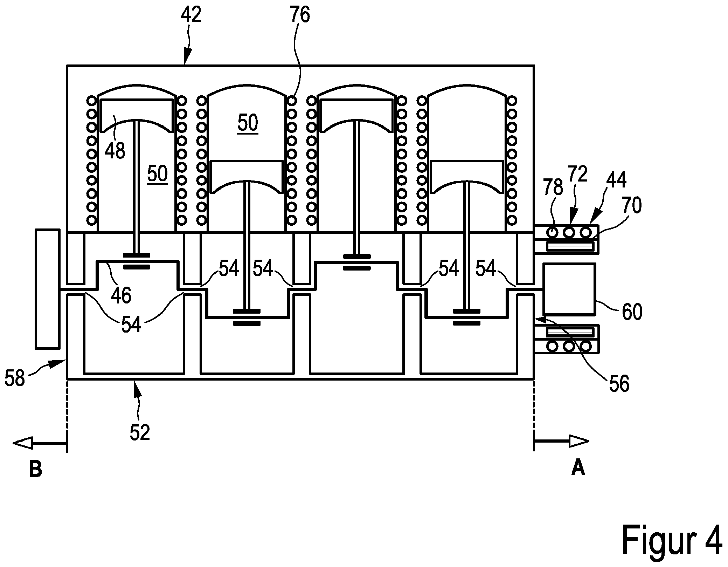

Eine alternative Ausgestaltung eines Blockheizkraftwerk-Aggregates ist in Figur 4 gezeigt.
Abweichend zu der Darstellung der Figur 3 zeigt Figur 4, dass das Verbrennungskolbenmotorgehäuse **52** auch das Statorgehäuse **70** bildet. Das Statorgehäuse **70** und das Verbrennungskolbenmotorgehäuse **52** sind also unterbrechungslos miteinander verbunden. Sie können ein gemeinsames Element, insbesondere Gusselement sein. Ferner ist es auch möglich, dass sie miteinander verschweißt sind. In einer weiteren Ausgestaltungsvariante sind das Generatorgehäuse **70** und das Verbrennungskolbenmotorgehäuse durch einen Pressverband oder durch eine Presspassung kraft- und/oder formschlüssig miteinander verbunden.
Außerdem zeigt die Darstellung aus Figur 4 einen kurzen Läufer und Stator. Denn für ein kompaktes Aggregat ist es bevorzugt, dass der Läufer und/oder der Stator kurz ist und insbesondere eine maximale axiale Länge **66** von 15, 12,5, 10, 7,5, 5, 4 oder 3 cm aufweist. Es ist ferner bevorzugt, dass ein Verhältnis von einem maximalen radialen Durchmesser **64** zu einer maximalen axialen Länge 66 des Läufers beziehungsweise des Stators größer als 4 ist, insbesondere aus einem Bereich von 4 bis 10, vorzugsweise aus einem Bereich von 5 bis 8.
Vorteilhaft ist in Figur 3 und in Figur 4 dargestellt, dass die Wandung der ersten Stirnseite **56** des Verbrennungskolbenmotorgehäuses **52** auch eine stirnseitige Wandung des Stators **72** bildet. Denn wie auch schon die zuvor genannten Darstellungen zeigen, kennzeichnet sich das Aggregat insbesondere auch dadurch, dass der Stator keine eigene stirnseitige Wandung aufweist und dass das Statorgehäuse **70** entweder durch das Verbrennungskolbenmotorgehäuse **52** gebildet ist öder an dieses angeflanscht ist. Es entfällt deshalb auch die Notwendigkeit einer eigenen und/oder separaten stirnseitigen Wandung für den Stator **70.** Im Grenzbereich vom Generator zum Verbrennungskolbenmotor ist die stirnseitige Wandung **56** des Verbrennungskolbenmotorgehäuses auch die einzige Trennwand.

Dadurch, dass der Läufer 60 einseitig oder fliegend gelagert ist, wirken durch den Läufer 60 auch keine Lagerungskräfte auf den Stator. Denn die Lagerung des Läufers ist auch die Lagerung der Kurbelwelle 46 des Verbrennungskolbenmotors 42, die insbesondere mehrere Lagerungsstellen 54 aufweist.

In Figur 3 und in Figur 4 sind weiterhin insbesondere mehrere Motorkühlungsleitungen 76 und Generatorkühlungsleitungen 78 dargestellt. Die Motorkühlungsleitungen sind in unmittelbarer Nähe zu den Zylindern 50 angeordnet. Die Generatorkühlungsleitungen sind am radial äußeren Umfang des Stators angeordnet. Für beide Kühlungsleitungen gilt, dass sie um einen Zylinder beziehungsweise im radial äußeren Bereich des Stators Windungen bilden. Die Kühlungsleitungen können einen Kühlkreislauf einer Kühlung bilden, der sowohl den Verbrennungskolbenmotor 42 als auch den Generator 44, beziehungsweise den Stator 72 kühlt, wobei der Kühlkreislauf vorzugsweise von eine Fluid oder insbesondere von Wasser, Öl oder Luft durchströmt ist.

In einer weiteren bevorzugten Ausgestaltungsvariante ist der Generator bürstenlos und/oder kann auch als Motor betrieben werden. Sofern der Generator auch als Motor betrieben werden kann, kann dieser im motorischen Betrieb auch zum Anlassen des Verbrennungskolbenmotors dienen.

Wie in Figur 3 dargestellt, weist das Blockheizkraftwerk-Aggregat 40 kein separates Schwungelement, insbesondere keine separate Schwungscheibe auf. Dies ist insbesondere vorteilhaft, weil kein Bauraum durch ein Schwungelement beansprucht wird, so dass das Blockheizkraftwerk-Aggregat sehr kompakt sein kann. Insbesondere ist an der Welle 46 beziehungsweise 68 in dem vom Verbrennungskolbenmotor 42 wegführenden, generatorseitigen Bereich A kein separates Schwungelement, insbesondere keine Schwungscheibe, befestigt. Allenfalls kann der Läufer 60 als ein Schwungelement des Verbrennungskolbenmotors 42 ausgestaltet sein. Sollte der Verbrennungskolbenmotor 42 dennoch ein separates Schwungelement benötigen, so kann, wie auch in der Figur 4 dargestellt, an der Welle 46 in dem vom Verbrennungskolbenmotor wegführenden, nicht generatorseitigen Bereich B alternativ oder ergänzend ein, insbesondere separates, Schwungelement, vorzugsweise eine Schwungscheibe, befestigt sein.

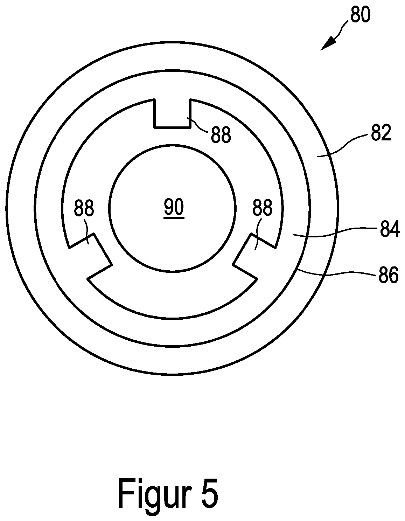

In der Figur 5 ist ein stark vereinfachter, schematischer Querschnitt des elektrischen Generators 44 gezeigt. Der äußere Ring in Figur 5 repräsentiert das Statorgehäuse 70, in das ein Statorkranz 80 eingesetzt ist. Der Statorkranz 80 und das Statorgehäuse 70·bilden einen Pressverband, insbesondere eine Presspassung. Der Innendurchmesser des Statorgehäuses 70 ist deshalb geringfügig kleiner als der Außendurchmesser des Statorkranzes 80. Es ist besonders bevorzugt, dass eine innere Mantelfläche des Statorgehäuses **70** und entsprechend die äußere Mantelfläche des Statorkranzes **80** zylindrisch oder konisch ist, so dass auch eine Kontaktfläche **82** zwischen dem Statorkranz **80** und dem Statorgehäuse **70** im Wesentlichen zylindrisch oder konisch ist. Ferner können der Statorkranz **80** und das Statorgehäuse **70** Führungselemente aufweisen, um eine absolute Positionierung der Elemente zueinander in Rotationsrichtung um eine Längsachse des Stators, insbesondere auch während eines Einsetzen des Statorkranzes **80,** zu erlauben. Hierfür eignet sich beispielsweise auch eine Passfeder.

Ferner sind in Figur 5 drei Statorzähne **84** des Statorkranzes **80** gezeigt, die nach innen, insbesondere in Richtung der Generatorwelle **68,** orientiert sind. Je nach Bauform können auch eine andere Anzahl an Zähnen **84** vorgesehen sein und/oder die Zähne **84** eine andere Form aufweisen. Aus dem Stand der Technik ist bekannt, dass um diese Zähne **84** die Wicklungen der Statorspulen führen. Alternativ zu der Anordnung mit drei Zähnen beziehungsweise mit drei Spulen sind bevorzugt sechzehn elektromagnetische Spulen gleich verteilt über den Umfang des Stators angeordnet.

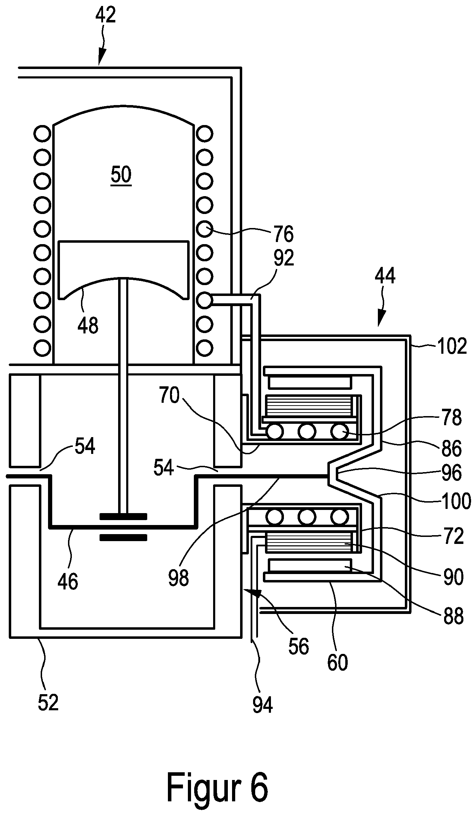

Die Darstellung aus Figur 6 zeigt einen Ausschnitt des erfindungsgemäßen Blookheizkraftwerks. In Übereinstimmung zu den Darstellungen der Figuren 4 und 5, weist das Blockheizkraftwerk einen Verbrennungskolbenmotor **42** - hier vereinfacht und nur ausschnittsweise wiedergegeben - und einen elektrischen Generator **44** auf. Der Verbrennungskolbenmotor **42** umfasst insbesondere eine Kurbelwelle **46,** Kolben **48** sowie Zylinder **50.** Der Verbrennungskolbenmotor **42** weist weiter ein Verbrennungskolbenmotorgehäuse **52** sowie Lagerstellen **54** auf, die die Kurbelwelle **46** an dem Verbrennungskolbenmotorgehäuse **52** lagern.

An der ersten Stirnseite **56** tritt die Kurbelwelle heraus und/oder springt gegenüber dem Verbrennungskolbenmotorgehäuse hervor. An der ersten Stirnseite **56** des Verbrennungskolbenmotorgehäuses **52** springt die Kurbelwelle insbesondere soweit hervor, dass ein Läuferträgerelement **86** des Läufers **60** drehfest an der Kurbelwelle **46,** beziehungsweise zu deren hervorspringenden Wellenende **98,** befestigt ist. Denn durch das Läuferträgerelement **86** ist der Läufer **60** drehfest mit der Kurbelwelle **46** gekoppelt und/oder verbunden. Bevorzugt ist das Läuferträgerelement **86** drehfest an die Kurbelwelle **46** angeflanscht. Dazu kann das Läuferträgerelement **86** und die Kurbelwelle **46** passend zueinander ausgestaltete Flanschelemente **96** aufweisen, die beispielsweise mittels Schraubverbindungen und/oder Passstiften kraft- und/oder formschlüssig miteinander verbindbar sind. Das Läuferträgerelement **86** ist also an einem ersten nach außen von der ersten Stirnseite **56** des Verbrennungskolbenmotorgehäuses **52** hervorspringenden fliegenden Wellenende insbesondere drehfest befestigt. Mit anderen Worten das Läuferträgerelement **86** und deshalb auch der Läufer **60** fliegend oder einseitig gelagert.

Insbesondere in Analogie zu einer Autofelge, kann das Läuferträgerelement **86** auch Speichen aufweisen, wobei die Speichen nach Art eines Propeller- oder Lüfterblattes ausgestaltet sind. Mit anderen Worten kann das Läuferträgerelement **86** sich radial nach außen erstreckende Stege aufweisen, die vorzugsweise die Form eines Lüfterblattes haben und besonders bevorzugt über den Umfang verteilt angeordnet sind. Insbesondere während des Betriebes der elektrischen Maschine können die Stege zwei Aufgaben erfüllen. Die Stege können Kraft- und/oder Moment übertragend wirken. Außerdem können die Stege bei einer Rotationsbewegung des Läuferträgerelement **86** einen Luftstrom erzeugen, insbesondere wenn die Stege die Form von Lüfterblättern aufweisen und/oder um ihre Längsachse in der Weise gedreht sind, so dass sie wie Lüfterblätter wirken.

Die Ausrichtung des Läufers **60** ist koaxial zu dem hervorspringenden Wellenende **98** der Kurbelwelle **46.** Ferner ist der Läufer **60** als Außenläufer ausgestaltet. Der Läufer ist also außerhalb des Stators **72** angeordnet. Gegenüber einen Innenläufer, wie dieser in den Figuren 3 und 4 gezeigt ist, können über den Umfang des Außenläufers 60 mehrere Permanentmagneten **90** vorzugsweise in gleichen Abständen zueinander angeordnet sein. Ein Außenläufer kann deshalb auch eine höhere magnetische Flussdichte aufweisen, als ein Innenläufer. Da die von einem Generator abgebbare Leistung auf eine magnetische Wechselwirkung mit den Permanentmagneten eines Läufers funktional zurückführbar ist, kann ein Außenläufer folglich auch eine höhere Nennleistung aufweisen. Mit anderen Worten kann der Außenläufer-Generator vorteilhaft eine höher Leistungsdichte als eine Innenläufer-Generator aufweisen.

Weiterhin weist das Läuferträgerelement **86** einen koaxial, konisch nach außen geöffneten Bereich **100** und/oder einen im Wesentlich senkrecht zur Drehachse des Läufers **60** ausgestalteten Bereich auf, so dass der Läufer **60** und das Läuferträgerelement **86** bevorzugt um den Stator **72** greifend ausgestaltet sind. Der Läufer **60** oder das Läuferträgerelement **86** weist jedoch keine eigene Welle auf. Der Läufer **60** oder das Läuferträgerelement **86** ist also wellenlos und/oder wellenfrei. Da das Läuferträgerelement **86** bevorzugt drehfest an der Kurbelwelle **46** befestigt ist, weist der Läufer außerhalb des Bereiches der Befestigung und/oder der Kurbelwelle **46** im radialen Bereich von 0 bis 5 mm um die Drehachse des Läufers **60** keine Welle auf.

Außerdem weist der Läufer **60** Permanentmagneten **88** auf, die nach innen orientiert sind. Die Permanentmagneten **88** können dazu so in den Läufer **60** integriert sein, dass die Innenfläche des Läufers **60** eine im Wesentlichen zylindrische Mantelfläche ist, und diese insbesondere abschnittsweise von den Permanentmagneten **88** gebildet ist.

Der Stator **72** beziehungsweise das Statorgehäuse **70** ist ortsfest mit dem Motorgehäuse **52** verbunden. Dazu kann der Stator **72** beziehungsweise das Statorgehäuse **70** insbesondere mittels Passstiften und/oder Schraubverbindungen an dem Motorgehäuse **52** befestigt sein. Über den Umfang des Stators verteilt weist der Stator **72** mehrere, insbesondere sechzehn, Statorspulen **90** auf, die radial nach außen orientiert sind.

Weiterhin weist der Stator Kühlungselemente, vorzugsweise Generatorkühlungsleitungen **78,** auf. Diese sind zwischen der Rotationsachse des Läufers **60** und den Statorspulen **90** angeordnet. Ferner sind die Generatorkühlungsleitungen **78** durch ein Rohrverbindungsleitungen **92** mit der Kühlung, insbesondere mit den Kühlungsleitungen **76,** des Verbrennungskolbenmotors **42** verbunden.

Die während des Betriebes des Blockheizkraftwerks in den Statorspulen **90** induzierte Spannung kann mittels elektrischer Verbindungsleitungen **94** an weitere elektrische Bauelemente übertragen werden.

Um den Generator vor äußeren Immissionen, insbesondere vor Einträgen durch Staub oder Flüssigkeiten, zu schützen und/oder um den sich im Betrieb des Blockheizkraftwerks drehenden Läufer vor einem ungewollten Kontakt mit menschlichen Gliedmaßen zu schützen, kann das Blockheizkraftwerk eine Abdeckung **102** aufweisen. Die Abdeckung **102** umfasst den elektrischen Generator **44** und schließt mit dem Verbrennungskolbenmotorgehäuse **52** ab.

## Patentansprüche

1. Blockheizkraftwerk-Aggregat (40) mit einem Verbrennungskolbenmotor (2, 42), umfassend einen Zylinder (50), und einem elektrischen Generator (20, 44), die mittels einer Leistung übertragenden Welle miteinander gekoppelt sind, wobei
der Generator (20, 44), einen Stator (24, 72) und einen Läufer (22, 60) aufweist,
der Stator (24, 72) mehrere Statorspulen (90) umfasst,
der Läufer (22, 60) ein Außenläufer (22, 60) ist,
der Läufer (22, 60) eine Rotationsachse aufweist,
der Läufer (22, 60) fliegend gelagert ist,
ein Verbrennungskolbenmotorgehäuse (10, 52) auch das Statorgehäuse (34, 70) bildet oder das Statorgehäuse (34, 70) an das Verbrennungskolbenmotorgehäuse (10, 52) angeflanscht ist,
ein Kühlkreislauf einer Kühlung gleichzeitig den Verbrennungskolbenmotor und den Stator (24, 72) kühlt, und wobei
der Kühlkreislauf Generatorkühlungsleitungen (78) und Motorkühlungsleitungen (76) umfasst, **dadurch gekennzeichnet, dass**
die Generatorkühlungsleitungen (78) zwischen der Rotationsachse des Läufers (60) und den Statorspulen (90) angeordnet sind,
die Generatorkühlungsleitungen (78) durch eine Rohrverbindungsleitung (92) mit den Motorkühlungsleitungen (76) verbunden sind, und dass
die Motorkühlungsleitungen (76) um den Zylinder (50) Windungen bilden.

2. Blockheizkraftwerk-Aggregat (40) nach Anspruch 1, **dadurch gekennzeichnet, dass** der Generator (20, 44) eine Synchronmaschine insbesondere mit permanenterregten Außenläufer ist.

3. Blockheizkraftwerk-Aggregat (40) nach einem der vorhergehenden Ansprüche, **dadurch gekennzeichnet, dass** Flanschelemente des Stators (24, 72) radial nach außen orientiert sind.

4. Blockheizkraftwerk-Aggregat (40) nach einem der vorhergehenden Ansprüche, **dadurch gekennzeichnet, dass** eine Positionierung von Stator (24, 72) zu Verbrennungskolbenmotorgehäuse (10, 52) mittels Passstiften erfolgt.

5. Blockheizkraftwerk-Aggregat (40) nach einem der vorhergehenden Ansprüche, **dadurch gekennzeichnet, dass** die Wandung einer ersten Stirnseite des Verbrennungskolbenmotorgehäuses (14, 56) auch eine stirnseitige Wandung des Stators (24, 72) bildet.

6. Blockheizkraftwerk-Aggregat (40) nach einem der vorhergehenden Ansprüche **dadurch gekennzeichnet, dass** der Läufer (22, 60) an einem ersten nach außen von der ersten Stirnseite vorspringenden fliegenden Wellenende vorzugsweise drehfest befestigt ist.

7. Blockheizkraftwerk-Aggregat (40) nach einem der vorhergehenden Ansprüche, **dadurch gekennzeichnet, dass** der Läufer (22, 60) wellenlos ist.

8. Blockheizkraftwerk-Aggregat (40) nach einem der vorhergehenden Ansprüche, **dadurch gekennzeichnet, dass** die Welle sowohl die Kurbelwelle (4, 46) des Verbrennungskolbenmotors (2, 42) als auch die Welle des Generators (20, 44) und/oder Läufers (22, 60) bildet.

9. Blockheizkraftwerk-Aggregat (40) nach einem der vorhergehenden Ansprüche, **dadurch gekennzeichnet, dass** der Läufer (22, 60) einseitig beziehungsweise fliegend durch eine Lagerung der Kurbelwelle (4, 46) des Verbrennungskolbenmotors (2, 42) gelagert ist, wobei die Lagerung mehrere Lagerungsstellen aufweisen kann.

10. Blockheizkraftwerk-Aggregat (40) nach einem der vorhergehenden Ansprüche, **dadurch gekennzeichnet, dass** die Lagerung der Kurbelwelle (4, 46) auch die einzige Lagerung des Läufers (22, 60) ist.

11. Blockheizkraftwerk-Aggregat (40) nach einem der vorhergehenden Ansprüche, wobei der Kühlkreislauf vorzugsweise von Wasser, Öl oder Luft durchströmt ist.

12. Blockheizkraftwerk-Aggregat (40) nach einem der vorhergehenden Ansprüche, **dadurch gekennzeichnet, dass** der Läufer (22, 60) zylinderförmig ist, und dass der Läufer (22, 60) kurz ist, insbesondere eine maximale axiale Länge von 4 cm bis 6 cm, insbesondere 5 cm aufweist, und/oder dass ein Verhältnis von einem maximalen radialen Durchmesser zu einer maximalen axialen Länge des Läufers (22, 60) größer als 4 ist, insbesondere aus einem Bereich von 4 bis 10, vorzugsweise aus einem Bereich von 5 bis 7 ist.

13. Blockheizkraftwerk-Aggregat (40) nach einem der vorhergehenden Ansprüche, **dadurch gekennzeichnet, dass** der Läufer (22, 60) durch einen schmalen (Luft-) Spalt (62), insbesondere von maximal 2 cm, vorzugsweise von maximal 5 mm, von der ersten Stirnseite des Verbrennungskolbenmotorgehäuses (14, 56) beabstandet ist, so dass ein möglichst geringes (Biege- oder Kipp-) Moment durch den Läufer (22, 60) auf die erste Lagerung wirkt.

14. Blockheizkraftwerk-Aggregat (40) nach einem der vorhergehenden Ansprüche, **dadurch gekennzeichnet, dass** das Generator (20, 44) bürstenlos ist.

15. Blockheizkraftwerk-Aggregat (40) nach einem der vorhergehenden Ansprüche, **dadurch gekennzeichnet, dass** der Generator (20, 44) auch als Motor betrieben werden kann, und dass der Generator (20, 44) im motorischen Betrieb zum Anlassen des Verbrennungskolbenmotors (2, 42) dient.

16. Blockheizkraftwerk-Aggregat (40) nach einem der vorhergehenden Ansprüche, **dadurch gekennzeichnet, dass** der Verbrennungskolbenmotor (2, 42) und/oder der Generator (20, 44) kein separates Schwungelement, insbesondere keine Schwungscheibe, aufweist oder dass an der Welle in dem vom Verbrennungskolbenmotor (2, 42) wegführenden, generatorseitigen Bereich kein separates Schwungelement, insbesondere keine Schwungscheibe, befestigt ist und/oder dass an der Welle in dem vom Verbrennungskolbenmotor (2, 42) wegführenden, nicht generatorseitigen Bereich ein insbesondere separates Schwungelement, vorzugsweise eine Schwungscheibe, befestigt ist.

17. Blockheizkraftwerk-Aggregat (40) nach einem der vorhergehenden Ansprüche, **dadurch gekennzeichnet, dass** der Läufer (22, 60) ein Schwungelement des Verbrennungskolbenmotors (2, 42) ist.

18. Blockheizkraftwerk-Aggregat (40) nach einem der vorhergehenden Ansprüche, **dadurch gekennzeichnet, dass** insbesondere sechzehn elektromagnetische Spulen gleich verteilt über den Umfang des Stators (24) angeordnet sind.

## Claims

1. A communal heating and power station unit (40) having a reciprocating internal combustion engine (2, 42), comprising a cylinder (50), and having an electrical generator (20, 44), which are coupled to one another by means of a shaft which transmits power, wherein
the generator (20, 44) has a stator (24, 72) and a rotor (22, 60),
the stator (24, 72) comprises a plurality of stator coils (90),
the rotor (22, 60) is an external rotor (22, 60),
the rotor (22, 60) has an axis of rotation,
the rotor (22, 60) is mounted in a floating manner,
a reciprocating internal combustion engine housing (10, 52) also forms the stator housing (34, 70), or the stator housing (34, 70) is flange-connected to the reciprocating internal combustion engine housing (10, 52),
a cooling circuit of a cooling system simultaneously cools the reciprocating internal combustion engine and the stator (24, 72), and wherein
the cooling circuit comprises generator cooling lines (78) and engine cooling lines (76), **characterized in that**
the generator cooling lines (78) are arranged between the axis of rotation of the rotor (60) and the stator coils (90),
the generator cooling lines (78) are connected to the motor cooling lines (76) by a pipe connection line (92), and **in that**
the motor cooling lines (76) form windings around the cylinder (50).

2. The communal heating and power station unit (40) according to claim 1, **characterized in that** the generator (20, 44) is a synchronous machine, in particular with a permanent-magnet external rotor.

3. The communal heating and power station unit (40) according to any one of the preceding claims, **characterized in that** the flange elements of the stator (24, 72) are oriented radially outwards.

4. The communal heating and power station unit (40) according to any one of the preceding claims, **characterized in that** positioning the stator (24, 72) with respect to the reciprocating internal combustion engine housing (10, 52) is carried out by means of dowel pins.

5. The communal heating and power station unit (40) according to any one of the preceding claims, **characterized in that** the wall of a first end face of the reciprocating internal combustion engine housing (14, 56) also forms an end wall of the stator (24, 72).

6. The communal heating and power station unit (40) according to any one of the preceding claims, **characterized in that** the rotor (22, 60) is attached, preferably in a rotationally fixed manner, to a first floating shaft end which projects outwards from the first end face.

7. The communal heating and power station unit (40) according to any one of the preceding claims, **characterized in that** the rotor (22, 60) has no shaft.

8. The communal heating and power station unit (40) according to any one of the preceding claims, **characterized in that** the shaft forms both the crankshaft (4, 46) of the reciprocating internal combustion engine (2, 42) and the shaft of the generator (20, 44) and/or rotor (22, 60).

9. The communal heating and power station unit (40) according to any one of the preceding claims, **characterized in that** the rotor (22, 60) is mounted on one side or in a floating manner by a bearing of the crankshaft (4, 46) of the reciprocating internal combustion engine (2, 42), wherein the bearing may have a plurality of bearing points.

10. The communal heating and power station unit (40) according to any one of the preceding claims, **characterized in that** the bearing of the crankshaft (4, 46) is also the only bearing for the rotor (22, 60).

11. The communal heating and power station unit (40) according to any one of the preceding claims, **characterized in that** preferably water, oil or air flows through the cooling circuit.

12. The communal heating and power station unit (40) according to any one of the preceding claims, **characterized in that** the rotor (22, 60) is cylindrical, and that the rotor (22, 60) is short, in particular has a maximum axial length of 4 cm to 6 cm, in particular 5 cm, and/or that the ratio of a maximum radial diameter to a maximum axial length of the rotor (22, 60) is greater than 4, is in particular in a range from 4 to 10, preferably in a range from 5 to 7.

13. The communal heating and power station unit (40) according to any one of the preceding claims, **characterized in that** the rotor (22, 60) is spaced apart from the first end face of the reciprocating internal combustion engine housing (14, 56) by a narrow (air) gap (62), in particular of a maximum of 2 cm, preferably of a maximum of 5 mm, such that a (bending or tilting) moment as small as possible caused by the rotor (22, 60) acts on the first bearing.

14. The communal heating and power station unit (40) according to any one of the preceding claims, **characterized in that** the generator (20, 44) is brushless.

15. The communal heating and power station unit (40) according to any one of the preceding claims, **characterized in that** the generator (20, 44) can also be operated as a motor, and that in the motor mode, the generator (20, 44) is used to start the reciprocating internal combustion engine (2, 42).

16. The communal heating and power station unit (40) according to any one of the preceding claims, **characterized in that** the reciprocating internal combustion engine (2, 42) and/or the generator (20, 44) has no separate inertia element, in particular no flywheel, or that no separate inertia element, in particular no flywheel, is attached to the shaft in the generator-side area leading away from the reciprocating internal combustion engine (2, 42), and/or that an inertia element, in particular a separate inertia element and preferably a flywheel, is attached to the shaft in the area which is not on the generator side and leads away from the reciprocating internal combustion engine (2, 42).

17. The communal heating and power station unit (40) according to any one of the preceding claims, **characterized in that** the rotor (22, 60) is an inertia element of the reciprocating internal combustion engine (2, 42).

18. The communal heating and power station unit (40) according to any one of the preceding claims, **characterized in that**, in particular, sixteen electromagnetic coils are arranged distributed uniformly over the circumference of the stator (24).

## Revendications

1. Agrégat de centrale de cogénération (40) doté d'un moteur à piston à combustion (2,42) comprenant un cylindre (50), et d'un générateur électrique (20,44) qui sont couplés l'un à l'autre au moyen d'un arbre transmettant une puissance, dans lequel le générateur (20,44) présente un stator (24,72) et un rotor (22,60),
le stator (24,72) comprend plusieurs bobines de stator (90),
le rotor (22,60) est un rotor extérieur (22,60),
le rotor (22,60) présente un axe de rotation,
le rotor (22,60) s'appuie de manière flottante,
un carter de moteur à piston à combustion (10,52) constitue également le boîtier du stator (34,70) ou le boîtier du stator (34,70) est bridé sur le carter de moteur à piston à combustion (10,52),
un circuit réfrigérant d'un système de réfrigération refroidit en même temps le moteur à piston à combustion et le stator (24,72) et
le circuit réfrigérant comprend des conduites de refroidissement de générateur (78) et des conduites de refroidissement de moteur (76), **caractérisé en ce que** les conduites de refroidissement de générateur (78) sont disposés entre l'axe de rotation du rotor (60) et les bobines du stator (90),
les conduites de refroidissement de générateur (78) sont connectées par une conduite de raccordement de tuyaux (92) aux conduites de refroidissement de moteur (76), et que
les conduites de refroidissement de moteur (76) forment des spires autour du cylindre (50).

2. Agrégat de centrale de cogénération (40) selon la revendication 1, **caractérisé en ce que** le générateur (20,44) est une machine synchrone, particulier dotée de rotors extérieurs excités en permanence.

3. Agrégat de centrale de cogénération (40) selon une des revendications précédentes, **caractérisé en ce que** des éléments de bridage du stator (24,72) sont orientés radialement vers l'extérieur.

4. Agrégat de centrale de cogénération (40) selon une des revendications précédentes, **caractérisé en ce qu'**un positionnement du stator (24,72) par rapport au carter de moteur à piston à combustion (10,52) est effectué au moyen de goupilles d'ajustage.

5. Agrégat de centrale de cogénération (40) selon une des revendications précédentes, **caractérisé en ce que** la paroi d'une première face frontale du carter de moteur à piston à combustion (14,56) constitue aussi une paroi frontale du stator (24,72).

6. Agrégat de centrale de cogénération (40) selon une des revendications précédentes, **caractérisé en ce que** le rotor (22,60) est fixé, de préférence de manière fixe en rotation, à une première extrémité d'arbre flottante saillant de la première face frontale.

7. Agrégat de centrale de cogénération (40) selon une des revendications précédentes, **caractérisé en ce que** le rotor (22,60) est dépourvu d'arbre.

8. Agrégat de centrale de cogénération (40) selon une des revendications précédentes, **caractérisé en ce que** l'arbre constitue aussi bien le vilebrequin (4,46) du moteur à piston à combustion (2,42) que l'arbre du générateur (20,44) et/ou du rotor (22,60).

9. Agrégat de centrale de cogénération (40) selon une des revendications précédentes, **caractérisé en ce que** le rotor (22,60) s'appuie unilatéralement ou de manière flottante par un palier du vilebrequin (4,46) du moteur à piston à combustion (2,42), le palier pouvant présenter plusieurs points d'appui.

10. Agrégat de centrale de cogénération (40) selon une des revendications précédentes, **caractérisé en ce que** le palier du vilebrequin (4,46) est aussi le seul palier du rotor (22,60).

11. Agrégat de centrale de cogénération (40) selon une des revendications précédentes, **caractérisé en ce que** le circuit de refroidissement est parcouru de préférence par de l'eau, de l'huile ou de l'air.

12. Agrégat de centrale de cogénération (40) selon une des revendications précédentes, **caractérisé en ce que** le rotor (22,60) est de forme cylindrique, et que le rotor (22,60) est court, présente en particulier une longueur axiale maximale de 4 cm à 6 cm, en particulier 5 cm, et/ou qu'un rapport entre un diamètre radial maximal et une longueur axiale maximale du rotor (22,60) est supérieure à 4, en particulier se situe dans une fourchette de 4 à 10, de préférence dans une fourchette de 5 à 7.

13. Agrégat de centrale de cogénération (40) selon une des revendications précédentes, **caractérisé en ce que** le rotor (22,60) est espacé par un étroit interstice d'air (62), en particulier de 2 cm au maximum, de préférence 5 mm au maximum, de la première face frontale du carter du moteur à piston à combustion (14,56), de sorte qu'un couple (de flexion ou de basculement) aussi faible que possible agit sur le premier palier par l'intermédiaire du rotor (22,60).

14. Agrégat de centrale de cogénération (40) selon une des revendications précédentes, **caractérisé en ce que** le générateur (20,44) est dépourvu de brosses.

15. Agrégat de centrale de cogénération (40) selon une des revendications précédentes, **caractérisé en ce que** le générateur (20,44) peut aussi être utilisé comme moteur, et que le générateur (20,44) sert, en mode motorisé, à amorcer le moteur à piston à combustion (2,42).

16. Agrégat de centrale de cogénération (40) selon une des revendications précédentes, **caractérisé en ce que** le moteur à piston à combustion (2,42) et/ou le générateur (20,44) ne présente pas d'éléments d'inertie, en particulier pas de disque d'inertie, séparé ou que, au niveau de l'arbre, dans la zone située du côté du générateur et partant du moteur à piston à combustion (2,42), aucun élément d'inertie, en particulier aucun disque d'inertie, séparé n'est fixé et/ou que, au niveau de l'arbre, dans la zone non située du côté du générateur et partant du moteur à piston à combustion (2,42), un élément d'inertie, de préférence un disque d'inertie, séparé est fixé.

17. Agrégat de centrale de cogénération (40) selon une des revendications précédentes, **caractérisé en ce que** le rotor (22,60) est un élément d'inertie du moteur à piston à combustion (2,42).

18. Agrégat de centrale de cogénération (40) selon une des revendications précédentes, **caractérisé en ce que**, en particulier, seize bobines électromagnétiques sont réparties régulièrement sur la circonférence du stator (24) .
